# EUROPEAN PATENT SPECIFICATION

(11) **EP 2 340 548 B1**
(45) Date of publication and mention of the grant of the patent: **19.12.2012**
(21) Application number: 09776572.1
(22) Date of filing: 29.04.2009
(51) Int. Cl.: H01H 13/82, H01H 13/88

(54) **DOME SHEET AND KEY PAD**
DOMFOLIE UND TASTENFELD
FEUILLE À DÔME ET TOUCHE NUMÉRIQUE

(30) Priority: 30.10.2008 US 290373
(43) Date of publication of application: 06.07.2011
(73) Proprietor: Sony Ericsson Mobile Communications AB, 221 88 Lund (SE)
(72) Inventor: ANNERFORS, Carl-Ola, S-223 61 Lund (SE)
(74) Representative: Banzer, Hans-Jörg
(86) International application number: PCT/EP2009/003117
(87) International publication number: WO 2010/049015

(56) References cited:
- EP-A- 0 847 066
- US-A1- 2005 121 299
- US-A1- 2007 170 645

## Description

### FIELD OF THE INVENTION

The present invention relates to a dome sheet, to a sheet for producing a dome sheet and to a key pad comprising a dome sheet. The invention further relates to a method of manufacturing a dome sheet.

### BACKGROUND OF THE INVENTION

Electronic devices, such as mobile electronic devices including mobile phones, personal digital assistants and the like often comprise a key pad with one or more keys for enabling a user to enter information or control commands. In these devices, an actuation of the key is detected electrically by the closing of a contact. For this purpose, modern key pads comprise metal dome arrays, also called key dome arrays or switching arrays, which comprise plural metal domes attached to a sheet which is adhered to a printed circuit board (PCB). Contacts printed on the circuit board are covered by and in contact with the metal domes of the metal dome sheet. When the metal dome is pressed down, an inner contact is brought into contact with an outer contact, as a result of which a current can flow and the actuation of the dome can be detected.

An example of dome sheets in a keypad is disclosed in US-A-2005/0121299.

A single layer metal dome array generally comprises metal dome contacts attached to a single layer film with an adhesive, e.g. a plastic film. In the film or underlying circuit board, an air hole is provided for each metal dome. When pushing in the metal dome, the air underneath the dome can escape, and the metal dome provides the operator with a "click feeling". By feeling the click, the operator gets a feedback on whether he actuated the corresponding key. Yet as moisture and dirt may enter through the air hole, the life time of such a single layer metal dome sheet is limited. Further, the single layer may be damaged by the metal dome contact which limits the life time of such a dome sheet to a certain number of actuations.

Other single layer dome sheets use cuts in the adhesive layer for providing ventilation. A further problem associated with single layer metal dome sheets (MDSs) is that a precise placement of an actuator for transferring a force for an actuation of the underlying metal dome is very difficult. An imprecise placement of the actuator results in a reduced reliability for switching operations.

Further, double layer metal dome sheets (MDSs) are known, which use an additional sheet or layer. The actuator can more precisely be positioned between the sheets in such a double layer MDS. As two sheets are used, the metal dome sheet assembly becomes stiffer. If such a stiff double layer sheet is adhered to a PCB, adhesion is often poor and crevices can form, into which dirt and moisture may enter. To prevent this, depressions or indentations are preformed in the sheet at the positions of the metal domes. Yet the preforming has negative effects on the tactility and operation force of the resulting metal dome switches. When pressing down on such a dome, not only the metal dome, but also the two preformed layers provide a resistance. As a result, the tactile characteristics of such a double layer sheet largely diverge from the characteristics of the metal dome itself. In particular, a higher operation force is needed to actuate a dome of such a metal dome sheet. Also, the click ratio is reduced in such a double layer sheet, meaning that the "click feeling" is much weaker for an operator.

It is thus desirable to improve the tactile characteristics of such a double layer dome sheet. It is further desirable to provide a moisture and dust-resistent dome sheet which enables a precise actuation of the domes. Such a dome sheet should also be versatile, so that it can be used in different types of key pad assemblies, and with different types of substrates.

### SUMMARY OF THE INVENTION

Accordingly, there is a need for an improved dome sheet which obviates at least some of the above-mentioned drawbacks. This need is met by the features of the independent claims. The dependent claims describe preferred embodiments of the invention.

According to a first aspect of the invention, a dome sheet for forming a switch arrangement when mounted to a contact layer is provided. The dome sheet comprises at least one elastically deformable dome of a conductive material and a bottom sheet at least partially covering the at least one dome, the bottom sheet comprising at least one opening associated with the at least one dome, the opening having at least a first portion extending in a radial direction of the at least one dome and a second portion extending in a circumferential direction of the at least one dome. The dome sheet further comprises a top sheet at least partially covering the bottom sheet. The at least one opening is adapted to form an air channel for the at least one dome when the dome sheet is mounted to the contact layer.

By providing the opening with a first and a second portion in the bottom sheet, the dome sheet may achieve enhanced tactile characteristics for an actuation of the dome. In particular, as the bottom sheet may comprise less material in proximity to the dome, the force for actuating the dome may be reduced. The opening may also serve as a venting channel for the dome, so that air may escape into the channel when the dome is pressed down. This may further enhance the click feeling when the dome is actuated, and may bring the tactile characteristics of the assembly closer to the characteristics of an isolated dome. Further, as the top sheet may cover the at least one opening in the bottom sheet, an air channel formed by the opening in the bottom sheet may be protected from dust or moisture. By providing the second portion of the opening, tension in the sheets may be reduced. The dome sheet may thus be less likely to come loose when adhered to a contact layer, such as a printed circuit board or a flexible printed circuit (FPC). The formation of crevices may thus be prevented, leading to a better dust and moisture resistance. As the click ratio of such a dome sheet may be increased, a better tactile and audible feedback may be provided to an operator, and the arrangement may provide a better clicking sound.

According to an embodiment, the second portion of the at least one opening overlaps the at least one dome. Accordingly, the opening may be connected to the dome, resulting in improved tactile characteristics.

According to another embodiment, the first portion of the at least one opening extends along a direction from a first of the at least two domes to a second of the at least two domes. Two domes may thus be connected by the opening. In particular, the second portion of the at least one opening may extend in a circumferential direction of the first dome, and the at least one opening may further comprise a third portion extending in a circumferential direction of the second dome. The opening may thus have a dumbbell-like shape and may connect the two domes. As the ventilation of a dome may improve in such a configuration when mounted to a circuit board, the tactile characteristics for pressing one of the domes may further be improved.

According to another embodiment, the dome sheet further comprises a second opening associated with the at least one dome, the second opening having at least one portion extending in a circumferential direction of the at least one dome. The second portion of the one opening and the portion of the second opening may span at least one third of the circumference of the at least one dome. They may also span a smaller or a larger fraction of the circumference, e.g. one half or one fourth.

The dome sheet may further comprise an actuator arranged between the top sheet and the bottom sheet, the actuator being arranged so as to transfer pressure applied to the top sheet to the at least one dome. The actuator may also be arranged between the bottom sheet and the at least one dome, so as to transfer pressure from the bottom sheet to the dome. Providing the dome sheet with such an actuator may have the advantage that a precise pressure application to the dome may be enabled, even if the pressure is applied by a key with a flat bottom. Using a top and a bottom sheet further has the advantage that the actuator may be precisely and securely positioned which is beneficial for good force transduction from a key to the dome. It may also increase the possible types of actuators that may be used. Further, the lifetime of the actuator may be prolonged, and accordingly the period of operational functionality of the corresponding dome.

The second portion of the at least one opening may have substantially the shape of a ring segment. The first portion of the at least one opening may have substantially the shape of a rectangle.

The dome sheet may comprise a plurality of domes, each dome being associated with at least one opening of the bottom sheet. A good ventilation of each dome may thus be ensured.

The at least one opening may be adapted to form an air channel which is sealed off to the outside when the dome sheet is mounted to the contact layer. In such a configuration, dust, dirt or moisture may be prevented from entering the sealed-off air channel, which may improve the reliability and life time of the so-formed switch arrangement.

The at least one opening may be adapted so as to provide a click ratio of at least 25% of the associated dome when the dome sheet is mounted to the contact layer. The opening may also be adapted to provide higher click ratios, e.g. 35%, 40%, 45%, or even 50%. By configuring the dome sheet with such click ratios, an operator using the dome sheet may be provided with a better click feeling.

According to another aspect of the invention, a sheet for the production of a dome sheet is provided. The sheet is adapted for an arrangement of at least one elastically deformable dome of a conductive material at a predetermined dome position on a sheet. The sheet comprises at least one opening associated with the dome position, the opening having a first portion extending in a radial direction of the dome position and a second portion extending in a circumferential direction around the dome position. The at least one opening is adapted to form an air channel for a dome at the associated dome position when the sheet is arranged in the dome sheet and the dome sheet is mounted to a contact layer. By using such a sheet in the construction of a dome sheet, the resulting dome sheet may achieve similar advantages as outlined above.

According to an embodiment, the material forming the sheet is polyethylene terephthalate (PET).

The second portion of the at least one opening of the sheet may overlap an area of the sheet which will abut a dome located at the associated dome position when the sheet is arranged in the dome sheet. The dome position may be further associated with a second opening provided in the sheet, the second opening having at least one portion extending in a circumferential direction around the associated dome position. The second portion of the opening may have substantially the shape of a ring segment.

According to another aspect of the invention, a key pad is provided. The key pad comprises a contact layer having at least one contact point. The key pad further comprises a dome sheet mounted to the contact layer, the dome sheet comprising at least one elastically deformable dome of a conductive material corresponding to the at least one contact point and a bottom sheet at least partially covering the at least one dome. The bottom sheet comprises at least one opening associated with the at least one dome, the opening having at least a first portion extending in a radial direction of the at least one dome and a second portion extending in a circumferential direction of the at least one dome. The dome sheet further comprises a top sheet at least partially covering the bottom sheet. The at least one opening is adapted to form an air channel with the contact layer for the at least one dome. Accordingly, a ventilation for the at least one dome may be provided, which may improve the tactile characteristics for an actuation of the dome.

According to an embodiment, the key pad further comprises at least one key corresponding to the at least one dome and arranged so as to actuate the dome upon an application of pressure to the key. When the key is pressed, the dome may accordingly be pressed down and may establish a contact at the contact point, which may lead to the detection of the pressing of the key.

According to another embodiment, the key pad further comprises an actuator arranged between the top sheet and the bottom sheet or between the bottom sheet and the dome, so that an application of pressure to the key is transferred to the dome by the actuator. Even if the key does not have a point for actuating the dome, such as a key with a flat bottom, a force applied to the key can be precisely transmitted to the dome by providing such an actuator.

The contact layer may be a printed circuit board or a flexible printed circuit.

According to another aspect of the invention, a method of adjusting an actuation force of a dome of a dome sheet is provided. The dome sheet comprises at least one elastically deformable dome of a conductive material, a bottom sheet at least partially covering the at least one dome, and a top sheet at least partially covering the bottom sheet. The method comprises the steps of providing at least one opening for the at least one dome in the bottom layer, the opening being adapted to form an air channel for ventilating the at least one dome when the dome sheet is mounted on a contact layer and when the dome is actuated, and of adjusting a force required for an actuation of the dome by adjusting a dimension and/or a shape of the opening in the bottom layer which forms the air channel when the dome sheet is mounted on a contact layer. Using such a method, the tactile characteristics and the actuation force of the dome may be tuned by adjusting the dimensions and/or the shape of the opening. By such a method, the performance of a dome sheet in particular regarding operation force and click ratio may be easily adjusted.

According to another aspect of the invention, a method of manufacturing a dome sheet with plural domes located at predetermined dome positions is provided. The method comprises the steps of manufacturing a bottom sheet comprising at least one opening associated with at least one of said dome positions, the opening having at least a first portion extending in a radial direction of the associated dome position and a second portion extending in a circumferential direction of the associated dome position. The bottom sheet is laminated with a top sheet at least partially covering the bottom sheet. Further, dome shaped indentations a pre-formed in the laminated bottom and top sheets at the dome positions. Elastically deformable domes of a conductive material are arranged in the indentations at the dome positions.

According to an embodiment, the method further comprises placing an actuator between the bottom sheet and the top sheet at the predetermined dome position before lamination. Such a method achieves a good control of the positioning of the actuator when laminating the two sheets.

The bottom sheet may be manufactured from polyethyleneterephthalat (PET).

It is to be understood that the features mentioned above and those yet to be explained below can be used not only in the respective combinations indicated, but also in other combinations or in isolation, without leaving the scope of the present invention. Features of the above-mentioned aspects and embodiments may be combined to form new embodiments.

### BRIEF DESCRIPTION OF THE DRAWINGS

The foregoing and other features and advantages of the invention will become further apparent from the following detailed description read in conjunction with the accompanying drawings, in which like reference numerals refer to like elements.

Fig. 1 is a schematic drawing of a section of a sheet for producing a dome sheet according to an embodiment of the invention.

Fig. 2 is a schematic drawing of a sheet for producing a dome sheet according to an embodiment of the invention comprising plural openings associated with plural dome positions.

Fig. 3 is a sectional side view of a key pad according to an embodiment of the invention schematically illustrating the positioning of a dome, a bottom and a top layer.

Fig. 4 is another sectional side view of the key pad of Fig. 13 illustrating an air channel connecting two domes.

Fig. 5 is a disassembled view schematically showing a key pad according to an embodiment of the invention.

Fig. 6 is a flow diagram illustrating a method according to an embodiment of the invention.

### DETAILED DESCRIPTION OF THE INVENTION

In the following, embodiments of the present invention will be described in detail with reference to the accompanying drawings. It is to be understood that the following description of embodiments is given only for the purpose of illustration and is not to be taken in a limiting sense. The scope of the invention is not intended to be limited neither by the embodiments described hereinafter nor by the drawings, which are taken to be illustrative only, but is intended to be limited only by the appended claims and equivalents thereof.

It should be noted that the drawings are to be regarded as being schematic representations only, and elements in the drawings are not necessarily to scale with each other. Rather, the representation of the various elements is chosen such that their function and general purpose become apparent to a person skilled in the art.

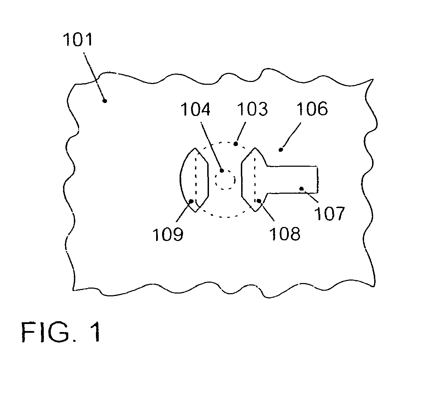

Fig. 1 shows a sheet 101 according to an embodiment of the present invention for the production of a dome sheet. Sheet 101 is adapted for an arrangement of an elastically deformable dome of a conductive material, such as a metal dome, e.g. made of stainless steel, as indicated by the dashed line marking where dome 103 is to be positioned. Sheet 101 comprises an opening 106 with a first portion 107 and a second portion 108. Portion 107 of opening 106 extends in a radial direction of the position where dome 103 is to be located. The second portion 108 of opening 106 extends in a circumferential direction around the position of dome 103. Portion 108 overlaps the area where dome 103 will be located when assembling a dome sheet using sheet 101, the area being indicated by the dashed line. In the present embodiment, portion 107 essentially has the shape of a rectangle, whereas portion 108 essentially has the shape of a ring segment. It should be clear that the portions may also have other shapes, as long as the opening has a portion extending in radial direction and a portion extending in the circumferential direction. When a dome sheet is assembled using sheet 101 and the dome sheet is being mounted to e.g. a PCB, opening 106 will form an air channel for a ventilation of dome 103.

Sheet 101 further comprises a second opening 109 with a portion extending in a circumferential direction of the position at which dome 103 will be located, similar to the portion 108 of opening 106. When forming a dome sheet and a corresponding switch arrangement, dome 103 will be covered by less material as sheet 101 comprises openings 106 and 109. As a result, the force needed to actuate a switch corresponding to dome 103 will be lowered compared to an arrangement in which such openings are not provided. By using the configuration of the present embodiment for sheet 101, the tactile feel can be improved and the characteristics for an actuation of dome 103 closely correspond to the characteristics of an isolated dome. It should be clear that sheet 101 may not only be used in the construction of a metal dome sheet, but also other types of dome sheets, which may be mounted to a printed circuit board, which may be flexible, but may also be mounted to other types of contact layers, such as a flexible printed circuit (FPC).

In Fig. 1, the position at which an actuator 104 may be placed when a dome sheet is assembled using sheet 101 is also shown with a dashed line. Actuator 104 may be located between sheet 101 and a top sheet, or between sheet 101 and dome 103, and may be used to transfer an applied force to the dome 103.

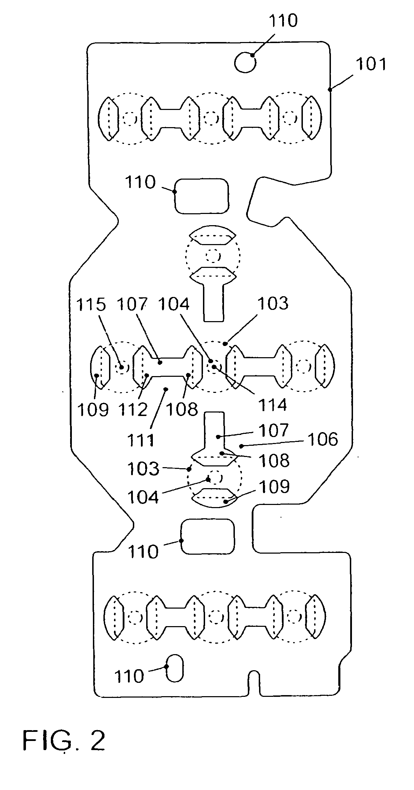

Fig. 2 shows another embodiment of a sheet 101 which may be used for producing a dome array and a corresponding switch arrangement. Plural positions at which domes 103 and actuators 104 may be located when producing a dome sheet are indicated with dashed lines. Each dome position is associated with at least one opening 106 with a first portion 107 and a second portion 108, which are similarly configured as the corresponding portions shown in Fig. 1. Further, some openings such as opening 111 are located in between two dome positions at each of which a dome is to be placed. Besides portions 107 and 108, opening 111 comprises a third portion 112. The third portion 112 extends in a circumferential direction of the dome to be positioned at dome position 115. Opening 111 thus has a symmetrical dumbbell-like shape in the present embodiment, and overlaps the domes to be positioned at dome position 114 and 115. Accordingly, if sheet 101 of Fig. 2 is used to produce a dome sheet and a switch array by mounting the dome sheet to e.g. a printed circuit board, opening 111 will form an air channel connecting the domes at position 114 and 115. Thus, a good ventilation is provided for the domes at the respective positions. As can be seen, the dome located at position 114 is associated with further openings, so that the air channels being formed by these openings connect plural dome chambers. The air can thus escape to other dome chambers when the dome is actuated, and accordingly, the force required for actuating the dome can be reduced. A further force reduction is again achieved by providing the second opening 109 for dome position 115, whereas for dome position 114, a further dumbbell shaped opening is provided. Apart from the force reduction, the click ratio is increased, resulting in a positive feedback which indicates to an operator that a switch closure has occurred when actuating one of the domes. The actuation produces a tactile and audible click close to that of a single metal dome, which can not be achieved by conventional double layer metal dome sheets.

Sheet 101 may of course comprise more or fewer openings, and the openings may be shaped and sized differently. In particular, by adapting the dimensions, size and positioning of the openings, the click ratio, the operation force and the tactile characteristics of the domes of a resulting dome sheet can be adjusted. The click ratio may for example be adjusted to 25%, or any other value, such as 30%, 35%, 40% or even 50%. The click ratio is generally defined as the maximum load minus the minimum load normalized by the maximum load of the load profile resulting from an actuation of a dome. Higher click ratio results in a better click feeling. Accordingly, the feedback for an operator for whether a switch closure has actually occured is better for a higher click ratio.

Sheet 101 may be a bottom sheet for a dome sheet and may be produced of polyethylene terephthalate (PET). The openings associated with the domes 103 are adapted to form air channels which are sealed off to the environment when the sheet 101 is mounted to a printed circuit board for constructing a switch array. As the formed air channels are sealed off, no dust or dirt can enter. The functionality of the switches formed by domes 103 can thus be ensured over long periods of time.

In the present embodiment, opening 109 and portion 112 of opening 111 span approximately half the circumference of a dome positioned at a position 115. Such a choice provides good tactile characteristics for the dome, although the openings may also span a larger or a smaller portion of the circumference of the dome. Opening 109 and portion 112 are again formed in shape of a ring segment, whereas portion 107 has the shape of a rectangle. It should be clear that other shapes may also be used, portion 112 may for example have the shape of an elongated rectangle extending along the circumferential direction of the dome, or a more triangular shape with the hypothenuse of the triangle extending along the circumferential direction. Further openings 110 are provided in sheet 101, said openings being used for mounting a dome sheet comprising sheet 101 to a circuit board or for providing illumination to a key board formed using sheet 101, or other functionalities. In the embodiment of Fig. 2, domes 103 have an outline in the shape of a flattened circle. It should be clear that domes 103 may also have other shapes, such as semi-spherical shapes with a circular outline, or semi-spheroidal shapes with an elliptical outline, or the like. The domes outlined here are just an example, and any type of dome suitable for forming a dome sheet may be employed when assembling a dome sheet using sheet 101.

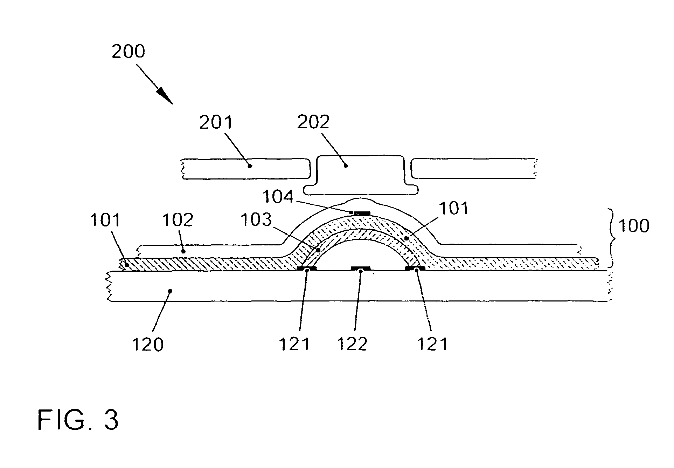

Fig. 3 shows a key pad 200 employing a dome sheet 100 according to an embodiment of the present invention. As can be seen from the sectional side view, dome sheet 100 comprises a top layer 102, a bottom layer 101 and a dome 103. For the bottom sheet 101, a sheet similar to the sheet shown in Fig. 1 or Fig. 2 is used. Bottom sheet 101 comprises one or more openings associated with dome 103, such as openings 106, 109 or 111 mentioned above. In the sectional view of Fig. 3, these openings are not visible and bottom sheet 101 is shown as a continous layer. Dome 103 of dome sheet 100 may be a metal dome, sucha a stainless steel dome, yet any other type of material which is flexible and conductive may also be used dome 103 has the shape of a spherical section, yet it may also have other shapes as mentioned above. Sheet 100 further comprises an actuator 104 placed between top sheet 102 and bottom sheet 101. This allows a precise placement of the actuator 104 when laminating top and bottom sheet 102 and 101. A precise placement is beneficial for a transfer of a force applied to key 202 to dome 103.

Dome sheet 100 is mounted to a contact layer in form of the printed circuit board 120, e.g. by an adhesive. Bottom sheet 101 may thus be additionally provided with an adhesive layer during fabrication of the dome sheet. Printed circuit board 120 comprises an outer ring shaped contact 121 and an inner circular contact 122. These contacts form a contact point, or a switch contact, which is used to detect an actuation of dome 103. When pressing down on dome 103, the dome deforms from a convex to concave shape, which deflection causes the center of the dome to contact the inner contact 122. As the rim of dome 103 is in contact with the outer contact 121, an electrical circuit between contacts 121 and 122 is closed, and the actuation of the dome can be detected.

PCB 120 may be a single layer PCB, in which ring shaped contact 121 comprises a gap to allow a PCB track to reach inner contact 122. On the other hand, PCB 110 can be a multilayer PCB, in which contacts 121 and 122 can be connected via different layers. Other types of contact layers, such as a FPC, may also be used.

Key pad 200 further comprises a cover plate 201 used to retain one or more keys 202. Cover plate 201 is only partially shown in Fig. 3 and may be mounted to circuit board 120 or may be part of a housing of a device incorporating key pad 200. Key 202 has a flat surface contacting the dome sheet 100. Even though, actuator 104 enables a precise pressure application to dome 103 by key 202. When key 202 is pressed, dome 103 is deflected downwards and contacts contact 122. When the key is released, dome 103 exerts a restoring force, and key 202 returns to its original position. Actuator 104 may be formed out of hard plastic or resin for providing a good force transfer. Actuator 404 may have a diameter between 1 and 3 mm, e.g. 1.8 mm, and a height between 0.05 and 1 mm, preferably between 0.08 and 0.5 mm. The actuator provides a small pushing point, ensuring a deflection of the center of dome 103, so that contact 122 is contacted. The precise positioning of actuator 104 enabled by the double layer construction of the dome sheet allows the use of keys with a flat bottom, yet other types of keys may also be used. Key 202 may for example have a projection on its lower surface for actuating dome 103.

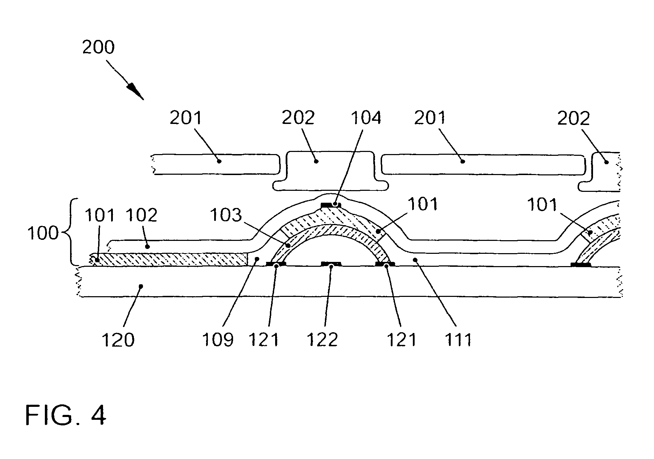

Fig. 4 schematically shows another sectional view of key pad 200. Dome sheet 100 implements a bottom sheet 101 similar to the sheet shown in Fig. 2. The sectional side view of Fig. 4 corresponds to a section taken along the line connecting positions 114 and 115 in Fig. 2. As bottom sheet 101 is laminated to top sheet 102 and mounted to PCB 120, openings 109 and 111 provided in bottom sheet 101 form air channels. For providing ventilation, the air channel formed by opening 111 connects two dome chambers. By providing openings 109 and 111, the force required to activate dome 103 is reduced. While a double sheet construction with a continous bottom layer would be much stiffer, the use of a bottom layer with openings as shown in Fig. 2 makes the construction more flexible and the characteristics of an actuation of dome 103 become closer to those of a single layer construction. In consequence, mainly one sheet contributes to the actuation force of the dome in the dome sheet of the present embodiment.

In the embodiment of Fig. 4, actuator 104 is positioned between bottom sheet 101 and top sheet 102. Yet in another embodiment, it may be placed between bottom sheet 101 and dome 103. The actuator may then be either adhered to bottom sheet 101 or to dome 103 before arranging the dome on the bottom sheet. This technique also achieves a precise positioning of actuator 104.

Keys 202 may not only be provided as single keys, but may also be provided as a key mat, e.g. made out of silicone rubber or the like. Cover plate 201 may be manufactured out of hard plastic or a metal or another material suitable for the production of a cover plate for a housing. Top sheep 102 and bottom sheet 101 may be fabricated from PET, yet they may also be made out of another plastic or polymer material.

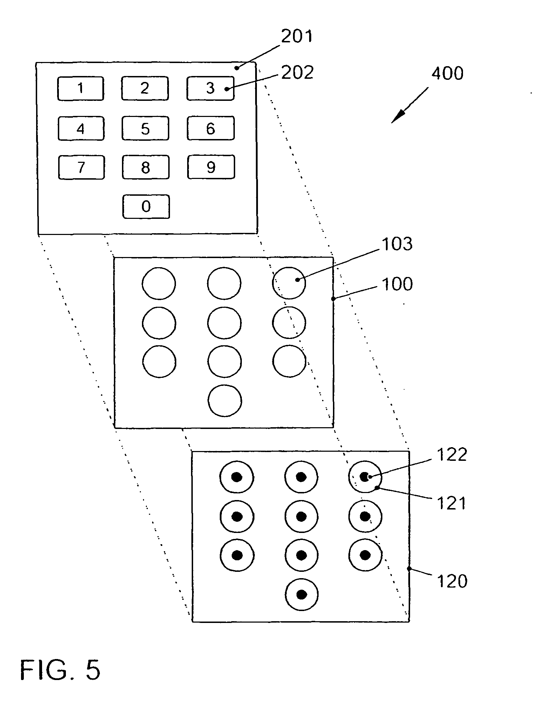

Fig. 5 schematically illustrates an exploded view of a key pad 400 according to another embodiment of the invention. Key pad 400 comprises a cover plate 201 and a plurality of keys 202. The keys are positioned above a dome sheet 100 comprising corresponding domes 103. Domes 103 are covered by a bottom and a top sheet with preformed indentations as illustrated in Fig. 4. Dome sheet 100 is mounted to printed circuit bord 120 e.g. by adhesion. Domes 103 contact the outer ring shaped contacts 121 of corresponding contact portions. Air channels are formed between the bottom layer of dome sheet 100 and PCB 120. In the present embodiment, PCB 120 is a multi layer PCB, and outer contacts 121 do not need to be provided with a gap.

The click sound and click feeling of keys 202, as well as the click ratio and actuation force can again be adjusted by modifying the dimensions and the shape of the openings provided in the bottom layer of dome sheet 100. The key pad according to the present embodiment can thus achieve a much better performance and in particular provide a better feedback to an operator compared to a conventional key pad using a conventional dome sheet. Further, such a key pad is dust and moisture resistant as the air channels formed by the bottom layer are closed off to the environment by the top layer and the PCB. A formation of crevices is also prevented due to the performed indentations in the laminated bottom and top layers. In addition to the advantageous tactile characteristics and the dust and moisture resistance, key pad 400 provides reliabel and precise switching due to the use of the actuators integrated in dome sheet 100.

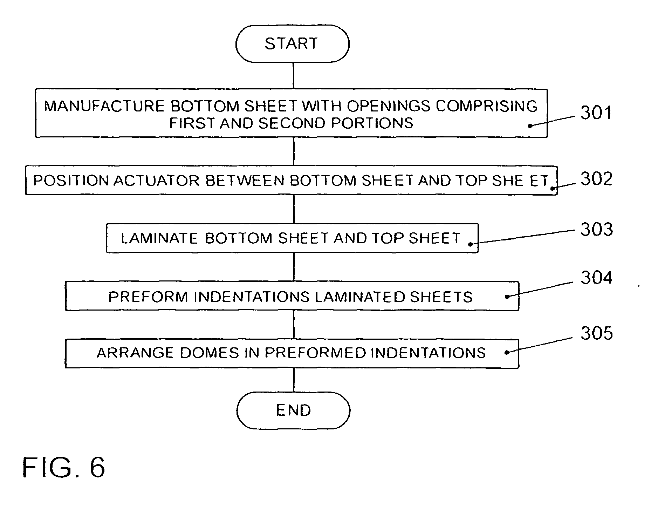

In the flow diagram of Fig. 6, an embodiment of a method for producing a dome sheet is illustrated. In step 301, a bottom sheet with openings comprising first and second portions, as illustrated with respect to Figs. 1 or 2, is manufactured. The sheet may for example be cut or punched from a larger sheet or molded, and the openings may also be cut or punched. Between the bottom sheet and the top sheet, which may be manufactured from the same or different material, an actuator is positioned in step 302. In step 303, bottom and top sheets are laminated. In the laminated sheets, indentations are formed in step 304. The indentations are formed at positions at which keys are to be located on a corresponding key pad. In a last step 305, domes, e.g. metal domes, are arranged in the preformed indentations. The domes may also be fixed, e.g. by adhesion, in the indentations. The method may of course comprise further steps, such as coating the bottom layer with an additional adhesive layer, while other steps are optional, such as providing an actuator in step 302.

The dome sheet obtained in such a way may then be used for manufacturing a key pad, e.g. by adhering the dome sheet to a contact layer such as a printed circuit board. A key mat can then be placed on top of the dome layer so as to obtain a functional key pad. The dome sheet can be produced with a relatively low thickness, resulting in a low thickness of the total key pad assembly. The dome sheet can be produced at relatively low cost in a straight forward production process.

The above-mentioned key pads may be used in any type of electronic device, such as a mobile electronic device. Examples include a mobile phone, a personal data assistant (PDA), a portable music player, a camera and the like.

It is to be understood that the features of the various embodiments described above may be combined with each other. As an example, the actuator may also be positioned between the bottom sheet and the dome in the method as described with respect to Fig. 6, or the bottom sheet of Fig. 4 may be provided with more or fewer openings as illustrated in Fig. 1 or Fig. 2.

## Claims

1. A dome sheet for forming a switch arrangement when mounted to a contact layer (120), comprising:
- at least one elastically deformable dome (103) of a conductive material;
- a bottom sheet (101) at least partially covering the at least one dome (103), the bottom sheet (101) comprising at least one first opening (106, 111) associated with said at least one dome (103), the first opening (106, 111) having at least a first portion (107) extending in a radial direction of the at least one dome (103) and a second portion (108) extending in a circumferential direction of the at least one dome (103); and
- a top sheet (102) at least partially covering the bottom sheet (101);
wherein the at least one first opening (106, 111) is adapted to form an air channel for the at least one dome (103) when the dome sheet (100) is mounted to the contact layer (120),
further comprising a second opening (109) associated with said at least one dome (103), **characterized by** the second opening having at least one portion extending in a circumferential direction of the at least one dome (103).

2. The dome sheet according to claim 1, wherein the second portion (108) of the at least one first opening (106) overlaps the at least one dome (103).

3. The dome sheet according to claim 1 or 2, comprising at least two domes (103), wherein the first portion (107) of the at least one first opening (106, 111) extends along a direction from a first of the at least two domes to a second of the at least two domes, and wherein the second portion (108) of the at least one first opening (111) extends in a circumferential direction of the first dome, and wherein the at least one first opening (111) further comprises a third portion (112) extending in a circumferential direction of the second dome.

4. The dome sheet according to any one of the preceding claims, wherein the second portion (108) of the at least one first opening (106, 111) and the portion of the second opening (109) span at least one third of the circumference of the at least one dome (103).

5. The dome sheet according to any one of the preceding claims, further comprising an actuator (104) arranged between the top sheet (102) and the bottom sheet (101), the actuator (104) being arranged so as to transfer pressure applied to the top sheet to the at least one dome (103), and/or an actuator arranged between the bottom sheet and the at least one dome, the actuator being arranged so as to transfer pressure applied to the bottom sheet to the at least one dome.

6. The dome sheet according to any one of the preceding claims, wherein the second portion (108) of the at least one first opening (106, 111) has substantially the shape of a ring segment, and wherein the first portion (107) of the at least one first opening (106, 111) has substantially the shape of a rectangle.

7. The dome sheet according to any one of the preceding claims, wherein the dome sheet (100) comprises a plurality of domes (103), each dome being associated with at least one first opening (106, 111) and second opening (109) of the bottom sheet (101).

8. The dome sheet according to any one of the preceding claims, wherein the at least one first opening (106, 111) is adapted to form an air channel which is sealed off to the outside when the dome sheet (100) is mounted to the contact layer (120).

9. The dome sheet according to any one of the preceding claims, wherein the at least one first opening (106, 111) is adapted so as to provide a click ratio of at least 25% of the associated dome (103) when the dome sheet (100) is mounted to the contact layer (120), the click ratio being defined as a maximum load minus a minimum load normalized by the maximum load of a load profile resulting from an actuation of the dome (103) associated with the at least one first opening (106, 111).

10. The dome sheet according to any one of the preceding claims, wherein the material forming the sheet is polyethylene terephthalate.

11. A key pad, comprising:
- a contact layer (120) having at least one contact point (121, 122); and
- a dome sheet (100) according to any one of claims 1-10 mounted to the contact layer (120).

12. The key pad according to claim 11, further comprising at least one key (202) corresponding to the at least one dome (103) and arranged so as to actuate the dome (103) upon an application of pressure to the key (202).

13. The key pad according to claim 11 or claim 12, wherein the contact layer is a printed circuit board or a flexible printed circuit.

14. Method of manufacturing a dome sheet with plural domes (103) located at predetermined dome positions, comprising:
- manufacturing a bottom sheet (101) comprising at least one first opening (106, 111) associated with at least one of said dome positions, the at least one first opening having at least a first portion (107) extending in a radial direction of the associated dome position and a second portion (108) extending in a circumferential direction of the associated dome position;
- laminating the bottom sheet (101) with a top sheet (102) at least partially covering the bottom sheet;
- pre-forming dome shaped indentations in the laminated bottom and top sheets at the dome positions; and
- arranging elastically deformable domes (103) of a conductive material in the indentations at the dome positions,
said manufacturing of the bottom sheet (101) comprises manufacturing the bottom sheet (101) with a second opening (109) associated with said at least one dome position, **characterized in that** the at least one second opening (109) has at least one portion extending in a circumferential direction of the associated dome position.

15. The method according to claim 14, further comprising:
- placing an actuator (104) between the bottom sheet (101) and the top sheet (102) at the predetermined dome positions before lamination.

## Patentansprüche

1. Domfolie zum Ausbilden einer Schalteranordnung, wenn sie an einer Kontaktschicht (120) angebracht ist, umfassend:
- mindestens einen elastisch verformbaren Dom (103) aus einem leitfähigen Material;
- eine untere Schicht (101), welche den mindestens einen Dom (103) zumindest teilweise überdeckt, wobei die untere Schicht (101) mindestens eine erste Öffnung (106, 111) umfasst, welche dem mindestens einen Dom (103) zugeordnet ist, wobei die erste Öffnung (106, 111) mindestens einen ersten Abschnitt (107), welcher sich in einer radialen Richtung des mindestens einen Doms (103) erstreckt, und einen zweiten Abschnitt (108), welcher sich in einer Umfangsrichtung von des mindestens einen Doms (103) erstreckt, aufweist; und
- eine obere Schicht (102), welche die untere Schicht (101) zumindest teilweise überdeckt;
wobei die mindestens eine erste Öffnung (106, 111) ausgestaltet ist, einen Luftkanal für den mindestens einen Dom (103) auszubilden, wenn die Domfolie (100) an der Kontaktschicht (120) angebracht ist,
ferner umfassend eine zweite Öffnung (109), welche dem mindestens einen Dom (103) zugeordnet ist, **dadurch gekennzeichnet, dass** die zweite Öffnung mindestens einen Abschnitt aufweist, welcher sich in einer Umfangsrichtung des mindestens einen Doms (103) erstreckt.

2. Domfolie nach Anspruch 1, wobei der zweite Abschnitt (108) der mindestens einen ersten Öffnung (106) den mindestens einen Dom (103) überlappt.

3. Domfolie nach Anspruch 1 oder 2, umfassend mindestens zwei Dome (103), wobei sich der erste Abschnitt (107) der mindestens einen ersten Öffnung (106, 111) entlang einer Richtung von einem ersten der mindestens zwei Dome zu einem zweiten der mindestens zwei Dome erstreckt, und wobei sich der zweite Abschnitt (108) der mindestens einen ersten Öffnung (111) in einer Umfangsrichtung des ersten Doms erstreckt, und wobei die mindestens eine erste Öffnung (111) ferner einen dritten Abschnitt (112) umfasst, welcher sich in einer Umfangsrichtung des zweiten Doms erstreckt.

4. Domfolie nach einem der vorhergehenden Ansprüche, wobei der zweite Abschnitt (108) der mindestens einen ersten Öffnung (106, 111) und der Abschnitt der zweiten Öffnung (109) mindestens ein Drittel des Umfangs des mindestens einen Doms (103) umspannen.

5. Domfolie nach einem der vorhergehenden Ansprüche, ferner umfassend ein Betätigungselement (104), welches zwischen der oberen Schicht (102) und der unteren Schicht (101) angeordnet ist, wobei das Betätigungselement (104) ausgestaltet ist, einen Druck, welcher auf die obere Schicht ausgeübt wird, auf den mindestens einen Dom (103) zu übertragen, und/oder ein Betätigungselement, welches zwischen der unteren Schicht und dem mindestens einen Dom angeordnet ist, wobei das Betätigungselement ausgestaltet ist, einen Druck, welcher auf die untere Schicht ausgeübt wird, auf den mindestens einen Dom zu übertragen.

6. Domfolie nach einem der vorhergehenden Ansprüche, wobei der zweite Abschnitt (108) der mindestens einen Öffnung (106, 111) im Wesentlichen die Form eines Ringsegments aufweist, und wobei der erste Abschnitt (107) der mindestens einen ersten Öffnung (106, 111) im Wesentlichen die Form eines Rechtecks aufweist.

7. Domfolie nach einem der vorhergehenden Ansprüche, wobei die Domfolie (100) mehrere Dome (103) umfasst, wobei jedem Dom mindestens eine erste Öffnung (106, 111) und eine zweite Öffnung (109) der unteren Schicht (101) zugeordnet ist.

8. Domfolie nach einem der vorhergehenden Ansprüche, wobei die mindestens eine erste Öffnung (106, 111) ausgestaltet ist, einen Luftkanal auszubilden, welcher zu der Außenseite abgedichtet ist, wenn die Domfolie (100) an der Kontaktschicht (120) angebracht ist.

9. Domfolie nach einem der vorhergehenden Ansprüche, wobei die mindestens eine erste Öffnung (106, 111) ausgestaltet ist, ein Klickverhältnis von mindestens 25% des zugeordneten Doms (103) bereitzustellen, wenn die Domfolie (100) an der Kontaktschicht (120) angebracht ist, wobei das Klickverhältnis als eine maximale Last minus einer minimalen Last normiert auf die maximale Last eines Lastprofils definiert ist, welches aus einer Betätigung des Doms (103) resultiert, welcher der mindestens einen ersten Öffnung (106, 111) zugeordnet ist.

10. Domfolie nach einem der vorhergehenden Ansprüche, wobei das Material, welches die Folie ausbildet, Polyethylenterephthalat ist.

11. Tastaturblock, umfassend:
- eine Kontaktschicht (120), welche mindestens einen Kontaktpunkt (121, 122) aufweist; und
- eine Domfolie (100) nach einem der Ansprüche 1-10, welche an der Kontaktschicht (120) angebracht ist.

12. Tastaturblock nach Anspruch 11, ferner umfassend mindestens eine Taste (202), welche sich auf den mindestens einen Dom (103) bezieht und ausgestaltet ist, den Dom (103) aufgrund einer Anwendung eines Drucks auf die Taste (202) zu betätigen.

13. Tastaturblock nach Anspruch 11 oder 12, wobei die Kontaktschicht eine Platine oder eine flexible Platine ist.

14. Verfahren zur Herstellung einer Domfolie mit mehreren Domen (103), welche an vorbestimmten Dompositionen angeordnet sind, umfassend:
- Herstellen einer unteren Schicht (101) umfassend mindestens eine erste Öffnung (106, 111), welche mindestens einer der Dompositionen zugeordnet ist, wobei die mindestens eine erste Öffnung mindestens einen ersten Abschnitt (107), welcher sich in einer radialen Richtung der zugeordneten Domposition erstreckt, und einen zweiten Abschnitt (108), welcher sich in einer Umfangsrichtung der zugeordneten Domposition erstreckt, aufweist;
- Laminieren der unteren Schicht (101) mit einer oberen Schicht (102), welche die untere Schicht zumindest teilweise überdeckt;
- Vorformen von domförmigen Vertiefungen in den laminierten unteren und oberen Schichten bei den Dompositionen; und
- Anordnen von elastisch verformbaren Domen (103) aus einem leitfähigen Material in den Vertiefungen bei den Dompositionen,
wobei das Herstellen der unteren Schicht (101) ein Herstellen der unteren Schicht (101) mit einer zweiten Öffnung (109) umfasst, welche der mindestens einen Domposition zugeordnet ist, **dadurch gekennzeichnet, dass** die mindestens eine zweite Öffnung (109) mindestens einen Abschnitt aufweist, welcher sich in einer Umfangsrichtung der zugeordneten Domposition erstreckt.

15. Verfahren nach Anspruch 14, ferner umfassend:
- Anordnen eines Betätigungselements (104) zwischen der unteren Schicht (101) und der oberen Schicht (102) bei den vorbestimmten Dompositionen vor einer Laminierung.

## Revendications

1. Feuille à dômes destinée à former un agencement de commutateur lorsque montée sur une couche de contact (120), comprenant :
- au moins un dôme déformable élastiquement (103) d'un matériau conducteur ;
- une feuille inférieure (101) recouvrant, au moins en partie, l'au moins un dôme (103), la feuille inférieure (101) comprenant au moins une première ouverture (106, 111) associée audit au moins un dôme (103), la première ouverture (106, 111) comportant au moins une première partie (107) s'étendant dans une direction radiale de l'au moins un dôme (103) et une deuxième partie (108) s'étendant dans une direction circonférentielle de l'au moins un dôme (103) ; et
- une feuille supérieure (102) recouvrant, au moins en partie, la feuille inférieure (101) ;
l'au moins une première ouverture (106, 111) étant apte à former un canal d'air pour l'au moins un dôme (103) lorsque la feuille à dômes (100) est montée sur la couche de contact (120),
comprenant, en outre, une seconde ouverture (109) associée audit au moins un dôme (103), **caractérisée par** la seconde ouverture comportant au moins une partie s'étendant dans une direction circonférentielle de l'au moins un dôme (103).

2. Feuille à dômes selon la revendication 1, dans laquelle la deuxième partie (108) de l'au moins une première ouverture (106) chevauche l'au moins un dôme (103).

3. Feuille à dômes selon la revendication 1 ou 2, comprenant au moins deux dômes (103), la première partie (107) de l'au moins une première ouverture (106, 111) s'étendant le long d'une direction allant d'un premier dôme desdits au moins deux dômes à un deuxième dôme desdits au moins deux dômes, et la deuxième partie (108) de l'au moins une première ouverture (111) s'étendant dans une direction circonférentielle du premier dôme, et l'au moins une première ouverture (111) comprenant, en outre, une troisième partie (112) s'étendant dans une direction circonférentielle du deuxième dôme.

4. Feuille à dômes selon l'une quelconque des revendications précédentes, dans laquelle la deuxième partie (108) de l'au moins une première ouverture (106, 111) et la partie de la seconde ouverture (109) couvrent au moins un tiers de la circonférence de l'au moins un dôme (103).

5. Feuille à dômes selon l'une quelconque des revendications précédentes, comprenant, en outre, un actionneur (104) agencé entre la feuille supérieure (102) et la feuille inférieure (101), l'actionneur (104) étant agencé de manière à transférer la pression appliquée sur la feuille supérieure à l'au moins un dôme (103), et/ou un actionneur agencé entre la feuille inférieure et l'au moins un dôme, l'actionneur étant agencé de manière à transférer la pression appliquée sur la feuille inférieure à l'au moins un dôme.

6. Feuille à dômes selon l'une quelconque des revendications précédentes, dans laquelle la deuxième partie (108) de l'au moins une première ouverture (106, 111) a sensiblement la forme d'un segment annulaire, et dans laquelle la première partie (107) de l'au moins une première ouverture (106, 111) a sensiblement la forme d'un rectangle.

7. Feuille à dômes selon l'une quelconque des revendications précédentes, dans laquelle la feuille à dômes (100) comprend une pluralité de dômes (103), chaque dôme étant associé à au moins une première ouverture (106, 111) et une seconde ouverture (109) de la feuille inférieure (101).

8. Feuille à dômes selon l'une quelconque des revendications précédentes, dans laquelle l'au moins une première ouverture (106, 111) est apte à former un canal d'air qui est hermétiquement isolé de l'extérieur lorsque la feuille à dômes (100) est montée sur la couche de contact (120).

9. Feuille à dômes selon l'une quelconque des revendications précédentes, dans laquelle l'au moins une première ouverture (106, 111) est apte à produire un taux de clics d'au moins 25 % du dôme associé (103) lorsque la feuille à dômes (100) est montée sur la couche de contact (120), le taux de clics étant défini en tant que charge maximale moins une charge minimale normalisée par la charge maximale d'un profil de charge résultant d'un actionnement du dôme (103) associé à l'au moins une première ouverture (106, 111) .

10. Feuille à dômes selon l'une quelconque des revendications précédentes, dans laquelle le matériau formant la feuille est du polyéthylène téréphtalate.

11. Clavier, comprenant :
- une couche de contact (120) comportant au moins un point de contact (121, 122) ; et
- une feuille à dômes (100) selon l'une quelconque des revendications 1 à 10 montée sur la couche de contact (120) .

12. Clavier selon la revendication 11, comprenant, en outre, au moins une touche (202) correspondant à l'au moins un dôme (103) et agencée pour actionner le dôme (103) lors de l'application d'une pression sur la touche (202).

13. Clavier selon la revendication 11 ou la revendication 12, dans lequel la couche de contact est une carte de circuits imprimés, souple.

14. Procédé de fabrication d'une feuille à dômes comportant une pluralité de dômes (103) situés en des positions de dôme prédéterminées, comprenant les opérations consistant à :
- fabriquer une feuille inférieure (101) comprenant au moins une première ouverture (106, 111) associée à au moins une desdites positions de dôme, l'au moins une première ouverture comportant au moins une première partie (107) s'étendant dans une direction radiale de la position de dôme associée et une deuxième partie (108) s'étendant dans une direction circonférentielle de la position de dôme associée ;
- stratifier la feuille inférieure (101) avec une feuille supérieure (102) recouvrant, au moins en partie, la feuille inférieure ;
- préformer des crans en forme de dômes dans les feuilles inférieure et supérieure stratifiées en les positions de dômes, et
- agencer élastiquement des dômes déformables (103) d'un matériau conducteur dans les crans en les positions de dômes,
ladite fabrication de la feuille inférieure (101) comprenant la fabrication de la feuille inférieure (101) avec une seconde ouverture (109) associée à ladite au moins une position de dôme, **caractérisé en ce que** l'au moins une seconde ouverture (109) comporte au moins une partie s'étendant dans une direction circonférentielle de la position de dôme associée.

15. Procédé selon la revendication 14, comprenant, en outre :
- le placement d'un actionneur (104) entre la feuille inférieure (101) et la feuille supérieure (102) en les positions de dômes prédéterminées avant stratification.
